# EUROPÄISCHE PATENTSCHRIFT

(11) **EP 4 260 407 B1**
(45) Veröffentlichungstag und Bekanntmachung des Hinweises auf die Patenterteilung: **26.08.2026**
(21) Anmeldenummer: 21827582.4
(22) Anmeldetag: 29.11.2021
(51) Int. Cl.: H01R 4/20, H01R 4/56, H01M 10/42, H01R 13/422, H01R 13/512, H01M 10/20, H01R 13/53, H01M 50/20, H01R 13/59, H01R 43/20, H01M 50/543, H01M 50/50

(54) **HOCHSTROMSTECKVERBINDER FÜR BATTERIEMANAGEMENTSYSTEM**
HIGH-CURRENT PLUG CONNECTOR FOR A BATTERY MANAGEMENT SYSTEM
CONNECTEUR MÂLE À COURANT FORT POUR UN SYSTÈME DE GESTION DE BATTERIE

(30) Priorität: 10.12.2020 DE 102020132962
(43) Veröffentlichungstag der Anmeldung: 18.10.2023
(73) Patentinhaber: HARTING Electric Stiftung & Co. KG, 32339 Espelkamp (DE)
(72) Erfinder: GRIEPENSTROH, Sebastian, 32339 Espelkamp (DE)
(86) Internationale Anmeldenummer: PCT/DE2021/100944
(87) Internationale Veröffentlichungsnummer: WO 2022/122075

(56) Entgegenhaltungen:
- EP-A1- 2 369 689
- WO-A1-2018/154074
- CN-A- 111 952 755
- CN-U- 208 272 252
- DE-A1- 102016 109 266
- DE-A1- 102018 126 448
- DE-A1- 19 630 333
- DE-A1- 3 039 892
- US-A- 3 957 337

## Beschreibung

Die Erfindung geht aus von einem Hochstromsteckverbinder als Einbausteckverbinder für ein Batteriemanagementsystem nach der Gattung des unabhängigen Anspruchs 1.

Des Weiteren geht die Erfindung aus von einem System, aufweisend mehrere Batterien und mehrere Patchkabel, ein Batteriemanagementsystem mit einem Anschlusskabel und einem Hochstromsteckverbinder gemäß Anspruch 1.

Außerdem geht die Erfindung aus von einem Verfahren zur Montage des Hochstromsteckverbinders an einer Gehäusewand gemäß Anspruch 8. Bei der Gehäusewand kann es sich insbesondere um die Gehäusewand eines Batteriemanagementsystems handeln.

Derartige Hochstromsteckverbinder werden benötigt, um ein Batteriemanagementsystem mit einem konfigurierbaren Paket ("Akkupack") mehrerer wieder aufladbaren Batterien ("Akkus") über mindestens ein Patchkabel steckseitig zu verbinden.

### Stand der Technik

Im Stand der Technik sind Batteriesäulen, Akkuschränke und Akkuracks bekannt, in denen mehrere Akkus mittels mehrerer Patchkabel zueinander parallel und/oder in Reihe geschaltet sind, um ihre Stromstärke und Ausgangsspannung jeweiligen Anforderungen anzupassen.

Die Druckschriften DE 10 2015 105 482 B4 und US 2018/0358789 A1 beschreiben den grundsätzlichen Aufbau eines solchen Schaltschranks oder Racks.

Die Druckschrift EP 2 176 901 B1 zeigt einen Akkumulator für handgeführte, elektromechanische Werkzeuge, mit einer Mehrzahl von Akkuzellen, die mittels mehrerer elektrischer Zellverbinder elektrisch fest miteinander verbunden sind.

Die Druckschrift DE 10 2016 124 501 A1 offenbart ein Batterie-Management-System für ein konfigurierbares Akkupack.

Nachteilig ist, dass bei der Konstruktion solcher Systeme zwischen den vor Ort, je nach Bedarf konfektionierten Anschlusskabeln der Batteriemanagementsysteme und den über einen Schraubanschluss daran anschließbaren Hochstromsteckern vor dem Hintergrund der hohen Stromstärken unerwünscht hohe Übergangswiderstände auftreten.

Das Deutsche Patent- und Markenamt hat in der Prioritätsanmeldung zu vorliegender Anmeldung den folgenden Stand der Technik recherchiert: DE 10 2015 105 482 B4, DE 199 43 373 A1, DE 10 2016 124 501 A1, US 2004/0266260 A1, US 2018/0358789 A1, EP 2 176 901 B1 und CN 206 098 925 U.

Die Druckschrift DE 10 2018 126 448 A1 offenbart einen elektrischen Steckverbinder mit einem Gehäuse, welches wenigstens eine Aufnahme aufweist, in welche ein elektrisches Kontaktelement entlang einer in Einsteckrichtung verlaufenden Längsachse einsteckbar ist. Ferner ist eine Primärsicherung vorgesehen, welche mit dem elektrischen Kontaktelement in einer Endrastposition in der Aufnahme verrastet, sowie ein Fixiermittel, um die Primärsicherung in der Endrastposition zu sichern. Das Fixiermittel ist derart ausgebildet und angeordnet, dass das Fixiermittel entlang der Längsachse der Aufnahme von einer Ausgangsstellung in eine Sicherungsstellung verschiebbar ist. In der Sicherungsstellung verhindert das Fixiermittel ein Lösen der Verrastung zwischen dem elektrischen Kontaktelement und der Primärsicherung.

Die Druckschrift CN 111952755 A offenbart einen Kupfer-Aluminium-Steckverbinder vom Typ mit direktem Einstecken, der ein männliches Ende und ein weibliches Ende umfasst, und ist dadurch gekennzeichnet, dass eine Verbindung mit einem Kupferrohr und einem Aluminiumrohr in einer Kunststoffhülle mit männlichem Ende angeordnet ist. Ein Kupferrohr des Verbinders wird von der Kunststoffhülle in das Einführrohr eingeführt, und eine Schelle ist am Rand des Einführrohrs angeordnet und am Ende der Kunststoffhülle befestigt. Ein Dichtungselement ist am Ende der anderen Seite des außerhalb des Dichtungselements angeordnet und ist mit Extrusionszähnen versehen. Die Kunststoffkappe drückt auf die Extrusionszähne, um das Dichtungselement zu extrudieren, so dass das Dichtungselement am Aluminiumkabel haftet. Eine weibliche Endverbindung mit einem Kupferrohr und einem Aluminiumrohr ist in dem Montagehohlraum für das weibliche Ende montiert. Das Endteil der Kunststoffschale ist mit einem Einführloch versehen, in das die Schelle eingesetzt wird. Ein weibliches Enddichtungsstück ist am Endteil der anderen Seite des Dichtungsstücks angeordnet und der Kunststoffring am weiblichen Ende ist mit Extrusionszähnen für das weibliche Ende versehen. Die Kunststoffkappe mit Innengewinde drückt auf die Extrusionszähne, um das Dichtungselement zu extrudieren, so dass das Dichtungselement fest mit dem Aluminiumkabel verbunden ist. Das Gerät ist einfach aufgebaut, leicht zu installieren, bequemer zu warten und in der Lage, die Zuverlässigkeit und Stabilität zu verbessern.

Die Druckschrift DE 10 2016 109 266 A1 der Rosenberger Hochfrequenztechnik GmbH & Co. KG betrifft eine Steckverbindungsvorrichtung mit wenigstens einem Steckverbinder. Der Steckverbinder weist ein Gehäuse, wenigstens einen Steckerkörper zur Verbindung mit einem Außenleiter eines Kabels und wenigstens ein Innenleiterteil zur Verbindung mit einem Innenleiter des Kabels auf. Das Gehäuse weist wenigstens eine Aufnahme zum Einsetzen des wenigstens einen Steckerkörpers auf. Vorgesehen ist ein Kontaktelement, welches derart in das Gehäuse (3) einsteckbar ist, dass ein vorderer Bereich (13a) des Kontaktelements (13) den in das Gehäuse (3) eingesetzten Steckerkörper (4) an dessen Außenumfang elektrisch kontaktiert. Das Kontaktelement (13) ist elektrisch leitend mit einem Befestigungsmittel (2) verbunden.

Die Druckschrift EP 2 369 689 A1 hat sich gegenüber einem konventionellen Steckverbinder die Aufgaben gesetzt, die Bauform zu vereinfachen und die Anzahl der Komponenten zu reduzieren und somit Herstellungskosten zu sparen. Gleichzeitig gilt es, den Übergangswiderstand und die dadurch entstehende Temperaturentwicklung zu reduzieren. Dazu wird ein Steckverbinder offenbart, der einen hohlzylindrischen Körper besitzt, der einen Rastvorsprung und eine Lasche umfasst. Weiterhin besitzt der Steckverbinder einen Kontakt, der in dem zylindrischen Körper angeordnet ist. Der Rastvorsprung ragt aus einer inneren Umfangsfläche des zylindrischen Körpers in radialer Richtung heraus. Die Lasche erstreckt sich in axialer Richtung des zylindrischen Körpers in einem geneigten Zustand relativ zur inneren Umfangsfläche. Der Rastvorsprung ist, ausgehend von der Lasche, in axialer Richtung versetzt angeordnet.

### Aufgabenstellung

Die Aufgabe der Erfindung besteht darin, den Übergangswiderstand zwischen einem solchen Anschlusskabel, das als Hochstromkabel ausgeführt ist, und einem Hochstromsteckverbinder für ein Batteriemanagementsystem zu reduzieren. Insbesondere soll es ermöglicht werden, das Anschlusskabel vor Ort individuell zu längen und einen Steckkontakt am Hochstromkabel zu vercrimpen, woraufhin der vercrimpote Steckkontakt in seiner geeigneten Position, also ohne das Kabel dabei zu verdrillen, im Anbaugehäuse positioniert werden kann.

Die Aufgabe wird durch den Gegenstand der unabhängigen Ansprüche gelöst.

Ein Hochstromsteckverbinder ist als Einbausteckverbinder ausgeführt und für den Einsatz in einem Batteriemanagementsystem vorgesehen. Dafür besitzt er ein Steckverbindergehäuse, welches mit einem Anbauflansch zum steckseitigen Anbau an eine Gehäusewand, insbesondere die Gehäusewand eines Gehäuses des Batteriemanagementsystems, ausgeführt ist.

Weiterhin besitzt der Hochstromsteckverbinder einen in das Steckverbindergehäuse eingefügten oder einzufügenden Steckkontakt mit einer Steckachse, einem Steckbereich und einem Kabelanschlussbereich. Mit dem Kabelanschlussbereich ist er über ein Anschlusskabel, das als Hochstromkabel ausgeführt ist, an das Batteriemanagementsystem anschließbar und insbesondere daran angeschlossen, also elektrisch leitend damit verbunden.

Erfindungsgemäß ist der Kabelanschlussbereich wahlweise als Crimpanschluss oder als Schraubanschluss ausgeführt, so dass es sich bei dem Steckkontakt wahlweise um einen Crimpkontakt oder einen Schraubkontakt handelt. Der Crimpkontakt ist im Steckverbindergehäuse zumindest während der Montage um seine Steckachse drehbar gehalten. Nach seiner Montage ist der eingefügte Crimpkontakt mittels eines Demontagewerkzeugs wieder demontierbar. Bevorzugt handelt es sich bei dem Steckkontakt um einen Stiftkontakt, aber auch die Ausführung als Buchsenkontakt oder hermaphroditischer Kontakt ist denkbar.

Ein Batteriesystem besitzt mehrere wieder aufladbare Batterien ("Akkus"), die jeweils mindestens zwei Anschlüsse in Form von Steckverbindern aufweisen und mehrere Patchkabel, über welche die Batterien an ihren Anschlüssen parallel und/oder in Reihe elektrisch leitend miteinander verbunden sind. Weiterhin besitzt das Batteriesystem ein Batteriemanagementsystem mit mindestens einem als Einbaustecker ausgeführten Hochstromsteckverbinder der vorgenannten Art. Die Batterien sind über den mindestens einen Hochstromsteckverbinder mit dem Batteriemanagementsystem elektrisch leitend verbunden.

Auch die Batterien können mit einem solchen Hochstromstecker ausgestattet sein.

Somit kann beispielsweise mindestens eine der Batterien an mindestens einem ihrer Hochstromsteckverbinder über mindestens ein Patchkabel an den Hochstromsteckverbinder des Batteriemanagementsystems angeschlossen sein.

Vorteilhafte Ausgestaltungen der Erfindung sind in den Unteransprüchen und der folgenden Beschreibung angegeben.

Ein Vorteil der Erfindung besteht darin, dass der Hochstromsteckverbinder gegenüber dem Anschlusskabel einen geringeren Übergangswiderstand aufweisen kann, als es bei ausschließlicher Ausführung des Steckkontakts als Schraubkontakt der Fall wäre.

Der Vorteil liegt darin, dass zwischen dem Crimpkontakt und dem Anschlusskabel nur ein einziger, nämlich der geringe Übergangswiderstand der Crimpverbindung von Bedeutung ist. Im Gegensatz dazu sind nämlich bei Verwendung des Schraubkontakts zwei verschiedene Übergangswiderstände zu verzeichnen. Ein erster Übergangswiderstand entsteht dort durch den Anschluss des Kabelschuhs an das Anschlusskabel. Dazu besitzt der Kabelschuh üblicherweise ebenfalls einen Crimpanschluss. Ein zweiter, in der Regel noch größerer elektrischer Widerstand entsteht aber zusätzlich zwischen dem Kabelschuh und dem Schraubanschluss des Schraubkontakts.

Ein weiterer Vorteil der Erfindung besteht darin, dass das besagte Anschlusskabel direkt bei der Konfiguration des Batteriesystems im Rack, Schaltschrank und/oder Regal, etc., geeignet gelängt werden kann.

Ein besonderer Vorteil liegt weiterhin darin, dass der vercrimpte Steckkontakt im Steckverbindergehäuse drehbar angeordnet ist. Dadurch kann der Crimpkontakt gegenüber dem Steckverbindergehäuse in eine geeignete Orientierung gebracht werden, ohne dass das Anschlusskabel sich dabei verdrillt. Dies ist besonders vorteilhaft, weil die Kabelstärken im angestrebten Starkstrombereich von z. B. bis zu 400 A im der Größenordnung von (je nach der möglichen maximalen Stromstärke) beispielsweise mehr als 20 mm², insbesondere mehr als 30 mm², besonders bevorzugt von mindestens 50 mm², also denkbar auch bis 100 mm² und mehr liegen können, überhaupt erst möglich oder zumindest erheblich erleichtert. Das Kabel könnte also anderenfalls einer möglichen Verdrillung einen erheblichen mechanischen Widerstand entgegensetzen und somit den händischen Steckvorgang behindern oder ihn gar verhindern.

Erfindungsgemäß weist das Steckverbindergehäuse eine Verdrehsicherung zum Zusammenwirken mit dem besagten Schraubkontakt auf. Dies ist besonders vorteilhaft, weil dadurch dasselbe Steckverbindergehäuse zusätzlich auch mit dem Schraubkontakt verwendet werden kann, der sich bei der Verschraubung bekanntlich nicht "mitdrehen" soll. Der Vorteil besteht insbesondere darin, dass nur eine einzige Art von Steckverbindergehäuse konstruiert, hergestellt, gelagert und anderweitig vorgehalten werden muss. Kunden, die beispielsweise einen Schraubkontakt für Stromstärken bis z. B. 200 A verwenden möchten, können dasselbe Steckverbindergehäuse verwenden. Bei Stromstärken bis z. B. 400 A kann dasselbe Steckverbindergehäuse alternativ dazu mit dem Crimpkontakt bestückt werden.

Dabei ist es vorteilhaft, dass der Crimpkontakt erfindungsgemäß mit der Verdrehsicherung nicht zusammenwirkt. Während der Kabelschuh des Schraubkontakts vor dem Festschrauben mit einer Mutter oder dergleichen um die Steckachse in die gewünschte Position gedreht werden kann, ist das Anschlusskabel an dem Crimpkontakt nach dem Crimpen als unlösbar fixiert anzusehen. Um das Anschlusskabel gemäß den jeweiligen Gegebenheiten, beispielsweise den Gegebenheiten eines bestimmten Akkuracks, geeignet längen zu können, ist jedoch ein anwenderseitiges Crimpen und händisches Einführen des Steckkontakts in das Steckverbindergehäuse notwendig.

Während des Crimpvorgangs ist es aber nicht - oder nur mit hohem Aufwand - absehbar, in welcher Orientierung das Anschlusskabel am Steckverbinder dazu angebracht werden muss. Daher ist es besonders vorteilhaft, dass der Crimpkontakt im Steckverbindergehäuse drehbar gehalten ist.

In einer bevorzugten Ausgestaltung ist vorgesehen, dass das Steckverbindergehäuse für den Crimpkontakt eine lösbare Drehsicherung, z. B. eine verschraubbare Drehsicherung, aufweist, durch welche der in das Steckverbindergehäuse eingefügte Crimpkontakt nach erfolgter Drehung in seine gewünschte Position endgültig fixierbar ist.

Erfindungsgemäß ist die Verdrehsicherung, die für das Zusammenwirken mit dem als Schraubkontakt ausgeführten Steckkontakt vorgesehen ist, als mindestens eine innere, insbesondere geradlinige Anformung oder als mindestens ein Steg ausgeführt . Der Schraubkontakt weist ebenfalls eine Gegenabflachung oder eine Nut auf, welche jeweils mit der Abflachung oder dem Steg zusammenwirkt. Dadurch kann der Schraubkontakt im Steckverbindergehäuse drehsicher gehalten sein und dadurch kabelanschlussseitig verschraubt werden.

Erfindungsgemäß besitzt das Steckverbindergehäuse mindestens einen Rastarm zum Verrasten an einem Rastkragen des Crimpkontakts, wobei der mindestens eine Rastarm mittels des Demontagewerkzeug zur Demontage des Crimpkontakts vom Rastkragen zur Entrastung auch wieder entfernbar ist.

In einer weiteren bevorzugten Ausführungsform kann der Steckverbinder zusätzlich zum besagten Steckverbindergehäuse weiterhin noch eine Kabelfixiereinrichtung, aufweisend ein separates zweites Gehäuse, nämlich ein Kabelanschlussgehäuse besitzen. Dieses Kabelanschlussgehäuse kann insbesondere auch einen Flansch besitzen. Dieser Flansch dient zum kabelanschlussseitigen Anbau des Kabelanschlussgehäuses an die besagte Gehäusewand.

Dies ist besonders vorteilhaft, weil der Steckkontakt zunächst am Hochstromkabel vercrimipt werden und dann in seiner geeigneten Position, also ohne das Kabel dabei zu verdrillen, im Anbaugehäuse positioniert werden kann.

Vorteilhafterweise weist das Kabelanschlussgehäuse eine Kabelverschraubung auf, durch welche der im Steckverbindergehäuse montierte Crimpkontakt in seiner endgültigen Position im Steckverbindergehäuse fixierbar ist. Insbesondere kann die Kabelverschraubung an ihrem Kabelanschlussseitigen Ende eine Vielzahl von Lamellen besitzen, welche durch eine aufzuschraubende Überwurfmutter zusammengepresst werden und das Hochstromkabel und damit den Steckkontakt an seinem Crimpbereich am Steckverbindergehäuse fixieren. Bevorzugt besitzt das Kabelanschlussgehäuse dazu noch ein Klemmgummi, das die Wirkung gegen Dreh- und Zugkräfte unterstützt und zudem abdichtend wirkt und ein Dichtungselement.

In einer besonders bevorzugten Ausgestaltung ist der Crimpkontakt zur Übertragung von Stromstärken von mehr als 200 A ("Ampere"), insbesondere mehr als 250 A, bevorzugt mehr als 300 A und besonders bevorzugt von mehr als 350 A, also beispielsweise von bis zu 400 A und möglicherweise sogar mehr ausgelegt.

Ein mögliches Verfahren zur Montage des Steckverbinders an der Gehäusewand kann folgendermaßen durchgeführt werden:
Zunächst wird das Anschlusskabel für die jeweilige Anwendung geeignet gelängt. Dies kann vorteilhafterweise geschehen, wenn die Abmessungen und Notwendigkeiten der jeweiligen Anordnung, insbesondere des Akkuracks bekannt sind. Von besonderem Vorteil ist dabei, dass der Crimpvorgang zusammen mit der Konstruktion und/oder Montage des Akkuracks geschehen kann, d. h. es müssen keine vorkonfektionierten Kabel z. B. beim Steckverbinderhersteller bestellt und zum Rackkonstukteur/ Rackmontieur transportiert werden. Dies vereinfacht die Flexibilität der Montage ungemein.

Das Anschlusskabel wird daraufhin, insbesondere vor Ort, am Crimpkontakt vercrimpt.

Daraufhin kann der der Crimpkontakt kabelanschlussseitig in das Steckverbindergehäuse eingefügt und darin verrastet werden und das Steckverbindergehäuse wird steckseitig an einem Wanddurchbruch an die Gehäusewand, insbesondere eine Gehäusewand des Batteriemanagementsystems, montiert, insbesondere geschraubt, wobei die Reihenfolge dieser beiden Schritte grundsätzlich auch vertauschbar ist, d. h. der Crimpkontakt kann auch in das zuvor montierte Steckverbindergehäuse eingefügt werden.

Besonders vorteilhaft ist dabei, dass der Crimpkontakt zu diesem Zeitpunkt noch drehbar in dem Steckverbindergehäuse gehalten und nicht, beispielsweise durch Polarisationselemente und/oder die besagte Verdrehsicherung, darin festgelegt ist. Dadurch ist die Montage mit dem daran befestigten, als Hochstromkabel mit einem Kabelquerschnitt von beispielsweise mehr als 20 mm², insbesondere mehr als 30 mm², besonders bevorzugt von mindestens 50 mm², also denkbar auch bis 100 mm² und mehr überhaupt erst möglich oder zumindest erheblich erleichtert.

Daraufhin kann das besagte Kabelanschlussgehäuse, durch welches das Anschlusskabel geführt ist, kabelanschlussseitig am Wanddurchbruch an die Gehäusewand geschraubt werden. Das Anschlusskabel und der fest damit vercrimpte Crimpkontakt werden nun in ihrer endgültigen Position durch Aufschrauben der Überwurfmutter an der Kabelverschraubung fixiert.

Auf diese Weise kann der vor Ort vercrimpte Crimpkontakt an dem geeignet gelängten Anschlusskabel zunächst flexibel montiert und dann trotzdem in seiner endgültigen Position fixiert werden. Von besonderem Vorteil ist dabei, dass dasselbe Steckverbindergehäuse auch für einen Schraubkontakt verwendbar ist.

Weiterhin ist es in einer besonders vorteilhaften Anwendung auch möglich, das Kabelanschlussgehäuse direkt an dem Steckverbindergehäuse zu verschrauben, um ein Tüllengehäuse zu schaffen. Auf diese Weise sind die einzelnen Bauteile vielfältig kombinierbar. Es brauchen auf diese Weise weniger einzelne Produkte hergestellt und gelagert zu werden. Auch die Logistik vereinfacht sich entsprechend und die Flexibilität nimmt bei geringeren Lagerkosten zu.

### Ausführungsbeispiel

Ein Ausführungsbeispiel der Erfindung ist in den Zeichnungen dargestellt und wird im Folgenden näher erläutert. Es zeigen:
- Fig. 1a, b: ein Steckverbindergehäuse mit einem Schraubkontakt;
- Fig. 2a, b: das Steckverbindergehäuse mit einem Crimpkontakt;
- Fig. 3: das Steckverbindergehäuse mit dem Crimpkontakt und einem Kabelanschlussgehäuse

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

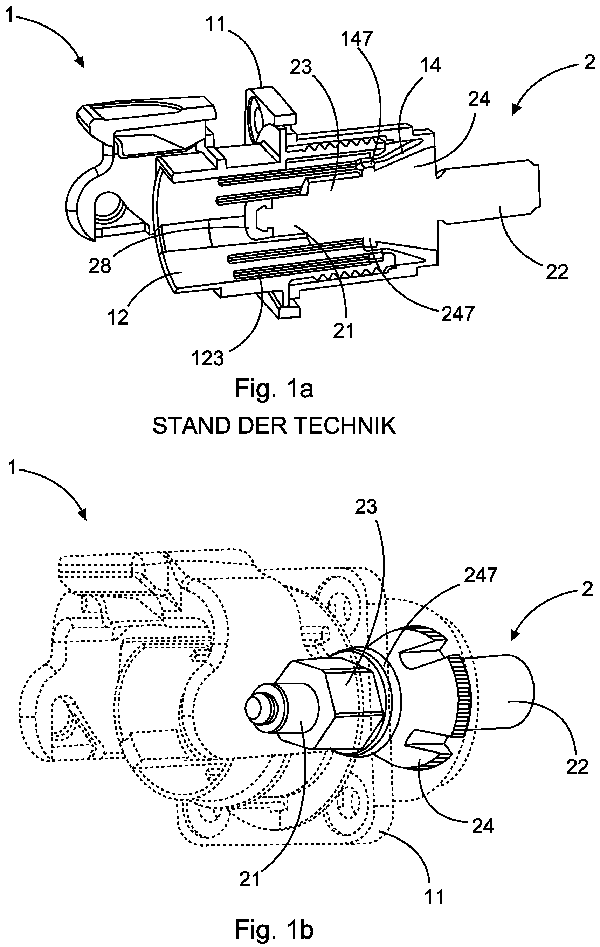

Die Fig. 1a und 1b zeigen einen Hochstromsteckverbinder mit einem Steckverbindergehäuse 1 und einem Schraubkontakt 2, wie es dem Stand der Technik für diese Art von Hochstromsteckverbindern entspricht.

Das Steckverbindergehäuse 1 besitzt einen Anbauflansch 11 und eine im Wesentlichen hohlzylinderförmige Kontaktkammer 12. In der Kontaktkammer 12 sind innenseitig Stege 123 angeformt. Weiterhin besitzt er kabelanschlussseitig angeformte und schräg in Steckrichtung in die Kontaktkammer hineinverlaufende Rastarme 14, deren Ende jeweils eine Rastkante 147 ausbildet.

Wie in der Fig. 1a besonders gut zu sehen ist, besitzt der Schraubkontakt 2 an seinem steckseitigen Ende einen Steckbereich 21 mit einem aufgesteckten Berührschutz 28. Am entgegengesetzten Ende weist er einen als Schraubanschluss ausgeführten Anschlussbereich 22 auf. Dazwischen besitzt er 2 an den Steckbereich 21 angrenzend einen Halteabschnitt 23 und einen mit seinem Rastkragen 247 an den Halteabschnitt 23 angrenzenden Rastabschnitt 24. Der Rastabschnitt 24 läuft in Richtung des Steckbereichs 21 konisch zu. Der Halteabschnitt 23 besitzt nicht näher bezeichnete Abflachungen, durch die er im Querschnitt, wie aus der Fig. 1b hervorgeht, im vorliegenden Beispiel sogar einen sechseckigen Querschnitt aufweist. Die Abflachungen wirken mit den Stegen 123 des Steckverbindergehäuses 1 als Verdrehsicherung zusammen. Dadurch ist eine Drehung des Schraubkontakts 2 um eine Steckachse verhindert, so dass es problemlos möglich ist, ihn im eingebauten Zustand an seinem Schraubanschluss 22 zu verschrauben.

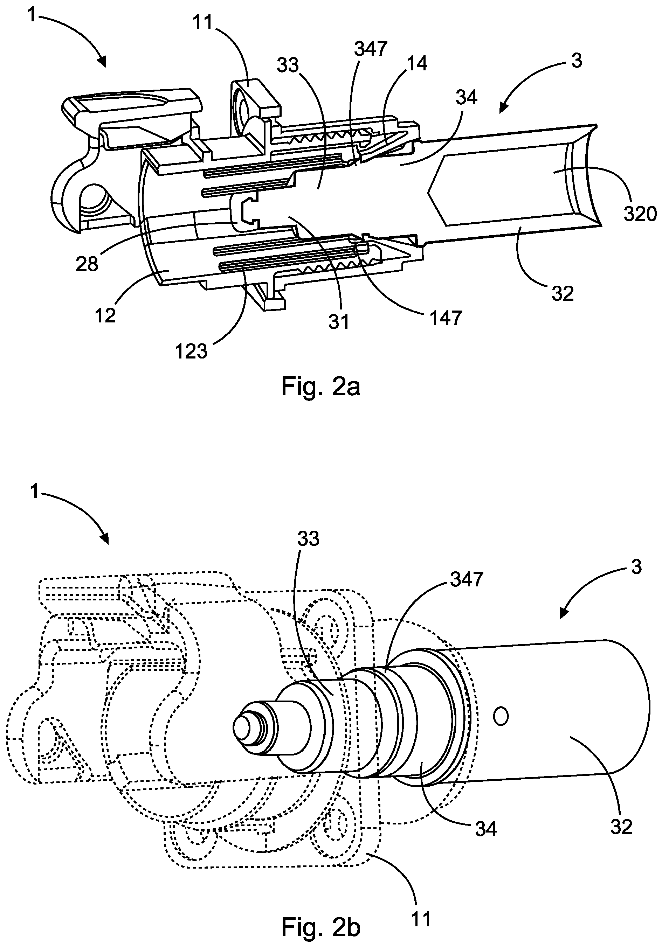

Die Fig. 2a und 2b zeigen dagegen eine erfindungsgemäße Anordnung, gebildet aus dem Steckverbindergehäuse 1 und einem Crimpkontakt 3.

Der Steckbereich 31 des Crimpkontakts 3 entspricht im Wesentlichen dem Steckbereich 21 des Schraubkontakts 2.

Des Weiteren besitzt diese Anordnung gegenüber der vorgenannten Anordnung folgende Unterschiede:
Der Halteabschnitt 33 ist zylinderförmig ausgeführt, so dass ein Zusammenwirken mit den Stegen 123 verhindert und eine Drehung um die Steckachse ermöglicht ist.

Auch der hinter dem Rastkragen 347 angeordnete Rastabschnitt 34 ist zylinderförmig ausgeführt, wodurch das Einführen eines nicht in der Zeichnung dargestellten Demontagewerkzeugs ermöglicht ist.

Kabelanschlussseitig besitzt der Crimpkontakt 3 selbstverständlich einen als Crimpanschluss 32 ausgeführten Kabelanschlussbereich.

Diese Anordnung ermöglicht eine Kabelkonfektionierung, d. h. Längung und Vercrimpung vor Ort, ohne dabei auf die Orientierung des Hochstromsteckverbinders zum Anschlusskabel bezüglich der Rotation um die Steckachse achten zu müssen. Schließlich kann der Crimpkontakt 3 bei einem Einbau des Hochfrequenzsteckverbinders an eine Gehäusewand, insbesondere eines Gehäuses eines Batteriemanagementsystems, in jeder beliebigen Rotation in das Steckverbindergehäuse 1 eingeführt und oder in seinem eingefügten Zustand nach Bedarf gedreht werden. Dies ist besonders wichtig, weil der Hochstromsteckverbinder dadurch problemlos mit Anschlusskabeln der Kabelstärken in der Größenordnung von z. B. 20 mm² bis über 100 mm² verwendet werden kann, welche zumindest äußerst unflexibel gegenüber einer Verdrillung sind und/oder eine solche Verdrillung überhaupt nicht zulassen.

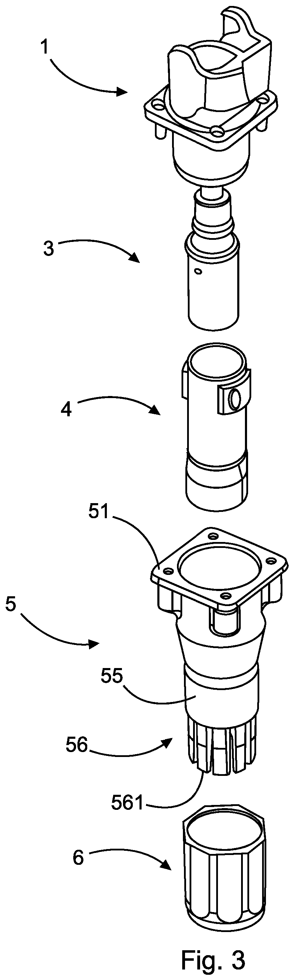

Die Fig. 3 zeigt eine Anordnung, die gegenüber der vorangegangenen Darstellung um eine Kabelfixiereinrichtung erweitert wurde in einer Explosionsdarstellung, bei der die Komponenten dieser Anordnung 1, 3, 4, 5, 6 auf der Steckachse liegend dargestellt werden.

Die Kabelfixiereinrichtung besitzt ein im Wesentlichen hohlzylinderförmiges Klemmgummi 4 und ein Kabelanschlussgehäuse 5. Dieses besitzt einen Flansch 51, eine Dichtungselement 55 und kabelanschlussseitige Lamellen 561, die Bestandteil einer Klemmeinrichtung 56 einer Kabelverschraubung sind. Weiterhin gehört zur Kabelverschraubung eine Überwurfmutter 6, durch welche das Anschlusskabel führbar und mit deren Hilfe es am Kabelanschlussgehäuse 5 fixierbar ist.

Wie die Zeichnung nahelegt, können diese Komponenten 1, 3, 4, 5, 6 in einer Ausführung direkt zusammengebaut werden, indem der Anbauflansch 11 des Steckverbindergehäuses 1 direkt mit dem Flansch 51 des Kabelanschlussgehäuses 5 verschraubt wird. Dadurch wird in dieser Ausführung mit diesen Komponenten ein beweglicher Hochstromsteckverbinder mit einem Tüllengehäuse montiert.

In einer weiteren Ausführung können dieselben Komponenten auch einen Einbaustecker bilden. Dazu wird das Steckverbindergehäuse 1 als Anbaugehäuse verwendet und steckseitig - also von außen - an einem Wanddurchbruch an eine Gehäusewand eines Gerätegehäuses, im vorliegenden Fall eines Gehäuses eines Batteriemanagementsystems, geschraubt. Dabei kann der mit dem nicht der Zeichnung dargestellten Anschlusskabel vercrimpte Crimpkontakt 3 bereits durch den Wanddurchbruch geführt und in das Anbaugehäuse 1 eingefügt sein. Er kann alternativ dazu auch in das bereits an der Gehäusewand montierte Anbaugehäuse 1 kabelanschlussseitig eingefügt werden. Dabei ist der Crimpkontakt 3 im Anbaugehäuse 1 um die Steckachse drehbar gehalten. Durch Aufstecken des Klemmgummis 4 und des Kabelanschlussgehäuses 5 auf den Kabelanschlussbereich 32 und durch Anschrauben des Kabelanschlussgehäuses 5 mit seinem Flansch 51 an die Kabelanschlussseite der Gehäusewand ist der Crimpkontakt in seiner endgültigen Position bereits gut fixiert. Durch Aufschrauben der Überwurfmutter 6 auf die Klemmeinrichtung 56 wird das Anschlusskabel am Kabelanschlussgehäuse 5 und damit auch der Crimpkontakt 3 im Anbaugehäuse 1 endgültig fixiert.

### Bezugszeichenliste

- 1: Steckverbindergehäuse / Anbaugehäuse
- 11: Anbauflansch
- 12: Kontaktkammer
- 123: Stege
- 14: Rastarm
- 147: Rastkante

- 2: Schraubkontakt
- 21: Steckbereich
- 22: Kabelanschlussbereich (Schraubanschluss)
- 23: Halteabschnitt
- 24: Rastabschnitt
- 247: Rastkragen
- 28: Berührschutz

- 3: Crimpkontakt
- 31: Steckbereich
- 32: Kabelanschlussbereich (Crimpanschluss)
- 33: Halteabschnitt
- 34: Rastabschnitt
- 347: Rastkragen

- 4: Klemmgummi

- 5: Kabelanschlussgehäuse
- 51: Flansch
- 55: Dichtungselement
- 56: Klemmeinrichtung
- 561: Lamellen

- 6: Überwurfmutter

## Patentansprüche

1. Hochstromsteckverbinder, der als Einbausteckverbinder ausgeführt und für den Einsatz in einem Batteriemanagementsystem geeignet ist und dafür ein Steckverbindergehäuse (1) besitzt, wobei das Steckverbindergehäuse (1) mit einem Anbauflansch (11) zum steckseitigen Anbau an eine Gehäusewand ausgeführt ist, wobei der Hochstromsteckverbinder weiterhin einen in das Steckverbindergehäuse (1) eingefügten oder einzufügenden Steckkontakt (3) mit einer Steckachse und einem Steckbereich (31) und einem Kabelanschlussbereich (32) besitzt und wobei der Hochstromsteckverbinder (1) mit seinem Kabelanschlussbereich (32) über ein Anschlusskabel, das als Hochstromkabel ausgeführt ist, an das Batteriemanagementsystem anschließbar ist, wobei der Steckkontakt (3) ein Crimpkontakt (3) ist,
- wobei der Crimpkontakt (3) eine Stromtragfähigkeit von mehr als 200 A ("Ampere") besitzt,
- wobei der Kabelanschlussbereich des Crimpkontaktes (3) als Crimpanschluss (32) ausgeführt ist,
- wobei der Crimpkontakt (3) im Steckverbindergehäuse (1) zumindest während der Montage um seine Steckachse drehbar gehalten ist,
- wobei der eingefügte Crimpkontakt (3) nach seiner Montage mittels eines Demontagewerkzeugs wieder demontierbar ist,
- wobei der Crimpkontakt (3) zwischen seinem Steckbereich (31) und seinem Kabelanschlussbereich (32) einen zylinderförmigen Halteabschnitt (33) ohne Abflachungen oder Einbuchtungen aufweist,
- wobei das Steckverbindergehäuse (1) mindestens einen Rastarm (14) zum Verrasten an einem Rastkragen (347) des Crimpkontakts (1) besitzt, wobei der mindestens eine Rastarm (14) mittels des Demontagewerkzeug zur Demontage des Crimpkontakts (1) vom Rastkragen (347) entfernbar ist,
**dadurch gekennzeichnet, dass**
das Steckverbindergehäuse (1) dazu eingerichtet ist, alternativ zu dem Crimpkontakt (3) einen Schraubkontakt (2) aufzunehmen,
wobei das Steckverbindergehäuse (1) eine Verdrehsicherung (123) zum Zusammenwirken mit dem Schraubkontakt (2) aufweist,
- wobei der Crimpkontakt (3) mit der Verdrehsicherung (123) jedoch nicht zusammenwirkt,
- wobei die Verdrehsicherung als mindestens eine innere gerade Anformung oder mindestens ein Steg (123) ausgeführt ist,
wobei die mindestens eine innere gerade Anformung oder der mindestens eine Steg (123) dazu eingerichtet ist, mit einer Gegenabflachung oder einer Nut eines Schraubkontakts (2) zusammenzuwirken.

2. Hochstromsteckverbinder gemäß vorstehendem Anspruch, wobei der Hochstromsteckverbinder zusätzlich zum besagten Steckverbindergehäuse (1) weiterhin noch ein separates zweites Gehäuse als Kabelanschlussgehäuse (5) besitzt, welches einen Flansch (51) zum kabelanschlussseitigen Anbau an die besagte Gehäusewand aufweist.

3. Hochstromsteckverbinder gemäß Anspruch 2, wobei das Kabelanschlussgehäuse (5) eine Kabelverschraubung aufweist, durch welche der im Steckverbindergehäuse (1) montierte Crimpkontakt (3) in seiner endgültigen Position im Steckverbindergehäuse (1) fixierbar ist, wobei eine Überwurfmutter (6) zur Kabelverschraubung gehört, durch welche das Anschlusskabel führbar und mit deren Hilfe es am Kabelanschlussgehäuse (5) fixierbar ist.

4. Hochstromsteckverbinder gemäß Anspruch 3, wobei der Hochstromsteckverbinder zusätzlich ein Klemmgummi (4) zur zusätzlichen Fixierung des Crimpkontakts (3) im Steckverbindergehäuse (1) besitzt.

5. Hochstromsteckverbinder gemäß einem der vorstehenden Ansprüche, wobei der Crimpkontakt (3) zur Übertragung von Stromstärken von mehr als 300 A ("Ampere") ausgelegt ist.

6. Batteriesystem, aufweisend
- mehrere wieder aufladbare Batterien und mehrere Patchkabel, über welche die Batterien parallel und/oder in Reihe elektrisch leitend miteinander verbunden sind und
- ein Batteriemanagementsystem, das mit mindestens einem als Einbaustecker ausgeführten Hochstromsteckverbinder gemäß einem der vorstehenden Ansprüche ausgestattet ist, wobei
- die Batterien über den mindestens einen Hochstromsteckverbinder mit dem Batteriemanagementsystem und jeweils zumindest eines der Patchkabel verbunden sind.

7. Batteriesystem gemäß Anspruch 6, wobei die Batterien ebenfalls mit einem Hochstromsteckverbinder gemäß einem der Ansprüche 1 bis 5 ausgestattet sind.

8. Verfahren zur Montage eines Hochstromsteckverbinders an eine Gehäusewand, wobei der Hochstromverbinder als Einbausteckverbinder ausgeführt ist und für den Einsatz in einem Batteriemanagementsystem geeignet ist und dafür ein Steckverbindergehäuse (1) besitzt, wobei das Steckverbindergehäuse (1) mit einem Anbauflansch (11) zum steckseitigen Anbau an eine Gehäusewand ausgeführt ist, wobei der Hochstromsteckverbinder weiterhin einen in das Steckverbindergehäuse (1) eingefügten oder einzufügenden Steckkontakt (3) mit einer Steckachse und einem Steckbereich (31) und einem Kabelanschlussbereich (32) besitzt und wobei der Hochstromsteckverbinder (1) mit seinem Kabelanschlussbereich (32) über ein Anschlusskabel, das als Hochstromkabel ausgeführt ist, an das Batteriemanagementsystem anschließbar ist, wobei der Steckkontakt ein Crimpkontakt (3) ist, - wobei der Crimpkontakt eine Stromtragfähigkeit von mehr als 200 A ("Ampere") besitzt,- wobei der Kabelanschlussbereich des Crimpkontaktes (3) als Crimpanschluss (32) ausgeführt ist,- wobei der Crimpkontakt (3) im Steckverbindergehäuse (1) zumindest während der Montage um seine Steckachse drehbar gehalten ist,-wobei der eingefügte Crimpkontakt (3) nach seiner Montage mittels eines Demontagewerkzeugs wieder demontierbar ist,- wobei der Crimpkontakt (3) zwischen seinem Steckbereich (31) und seinem Kabelanschlussbereich (32) einen zylinderförmigen Halteabschnitt (33) ohne Abflachungen oder Einbuchtungen aufweist,- wobei das Steckverbindergehäuse (1) mindestens einen Rastarm (14) zum Verrasten an einem Rastkragen (347) des Crimpkontakts (1) besitzt, wobei der mindestens eine Rastarm (14) mittels des Demontagewerkzeug zur Demontage des Crimpkontakts (1) vom Rastkragen (347) entfernbar ist, wobei das Steckverbindergehäuse (1) dazu eingerichtet ist, alternativ zu dem Crimpkontakt (3) einen Schraubkontakt (2) aufzunehmen, wobei das Steckverbindergehäuse (1) eine Verdrehsicherung (123) zum Zusammenwirken mit dem Schraubkontakt (2) aufweist, - wobei der Crimpkontakt (3) mit der Verdrehsicherung (123) jedoch nicht zusammenwirkt, - wobei die Verdrehsicherung als mindestens eine innere gerade Anformung oder mindestens ein Steg (123) ausgeführt ist, wobei die mindestens eine innere gerade Anformung oder der mindestens eine Steg (123) dazu eingerichtet ist, mit einer Gegenabflachung oder einer Nut eines Schraubkontakts (2) zusammenzuwirken, wobei der Hochstromsteckverbinder zusätzlich zum besagten Steckverbindergehäuse (1) weiterhin noch ein separates zweites Gehäuse als Kabelanschlussgehäuse (5) besitzt, welches einen Flansch (51) zum kabelanschlussseitigen Anbau an die besagte Gehäusewand aufweist, wobei das Kabelanschlussgehäuse (5) eine Kabelverschraubung aufweist, durch welche der im Steckverbindergehäuse (1) montierte Crimpkontakt (3) in seiner endgültigen Position im Steckverbindergehäuse (1) fixierbar ist, wobei eine Überwurfmutter (6) zur Kabelverschraubung gehört, durch welche das Anschlusskabel führbar und mit deren Hilfe es am Kabelanschlussgehäuse (5) fixierbar ist,
wobei das Verfahren die folgenden Schritte umfasst:
A. das Anschlusskabel wird für die jeweilige Anwendung geeignet gelängt;
B. das Anschlusskabel wird am Crimpkontakt (3) vercrimpt;
C. der Crimpkontakt (3) wird kabelanschlussseitig in das Steckverbindergehäuse (1) eingefügt und darin verrastet und das Steckverbindergehäuse (1) wird steckseitig an einem Wanddurchbruch an die Gehäusewand geschraubt;
D. das Kabelanschlussgehäuse (5) wird kabelanschlussseitig an dem Wanddurchbruch an die Gehäusewand geschraubt und umgreift dabei das Anschlusskabel;
E. das Anschlusskabel und der fest damit vercrimpte Crimpkontakt (3) werden in ihrer endgültigen Position durch Aufschrauben der Überwurfmutter (6) an dem Kabelanschlussgehäuse (5) fixiert.

9. Verfahren nach Anspruch 8, wobei in Verfahrensschritt D zur Zusätzlichen Fixierung des Crimpkontakts (3) ein Klemmgummi (4) zwischen dem Crimpkontakt (3) und dem Steckverbindergehäuse (1) angeordnet wird.

## Claims

1. High-current connector, which is designed as a built-in connector and is suitable for use in a battery management system and for this purpose has a connector housing (1), wherein the connector housing (1) is designed with a mounting flange (11) for plug-side mounting to a housing wall, wherein the high-current connector further has a plug contact (3) inserted or to be inserted into the connector housing (1) with a plug axis and a plug region (31) and a cable connection region (32), and wherein the high-current connector (1) is connectable with its cable connection region (32) via a connection cable, which is designed as a high-current cable, to the battery management system, wherein the plug contact (3) is a crimp contact (3),
- wherein the crimp contact (3) has a current-carrying capacity of more than 200 A ("amperes"),
- wherein the cable connection region of the crimp contact (3) is designed as a crimp connection (32),
- wherein the crimp contact (3) is held rotatably about its plug axis in the connector housing (1) at least during assembly,
- wherein, after its assembly, the inserted crimp contact (3) is demountable again by means of a disassembly tool,
- wherein the crimp contact (3) has, between its plug region (31) and its cable connection region (32), a cylindrical holding section (33) without flattened portions or indentations,
- wherein the connector housing (1) has at least one latching arm (14) for latching to a latching collar (347) of the crimp contact (1), wherein the at least one latching arm (14) is removable from the latching collar (347) by means of the disassembly tool for disassembly of the crimp contact (1),
**characterized in that**
the connector housing (1) is configured to receive a screw contact (2) as an alternative to the crimp contact (3),
wherein the connector housing (1) has an anti-rotation device (123) for cooperation with the screw contact (2),
- wherein the crimp contact (3), however, does not cooperate with the anti-rotation device (123),
- wherein the anti-rotation device is designed as at least one inner straight formation or at least one web (123),
wherein the at least one inner straight formation or the at least one web (123) is configured to cooperate with a counter-flattened portion or a groove of a screw contact (2).

2. High-current connector according to the preceding claim, wherein the high-current connector, in addition to said connector housing (1), further has a separate second housing as a cable connection housing (5), which has a flange (51) for cable-connection-side mounting to said housing wall.

3. High-current connector according to claim 2, wherein the cable connection housing (5) has a cable gland, by means of which the crimp contact (3) mounted in the connector housing (1) is fixable in its final position in the connector housing (1),
wherein a union nut (6) belongs to the cable gland, through which the connection cable can be guided and with the aid of which it is fixable to the cable connection housing (5).

4. High-current connector according to claim 3, wherein the high-current connector additionally has a clamping rubber (4) for additional fixation of the crimp contact (3) in the connector housing (1).

5. High-current connector according to one of the preceding claims,
wherein the crimp contact (3) is designed for transmitting currents of more than 300 A ("amperes").

6. Battery system, comprising
- a plurality of rechargeable batteries and a plurality of patch cables, via which the batteries are electrically conductively connected to one another in parallel and/or in series, and
- a battery management system which is equipped with at least one high-current connector according to one of the preceding claims, designed as a built-in connector, wherein
- the batteries are connected to the battery management system and in each case at least one of the patch cables via the at least one high-current connector.

7. Battery system according to claim 6, wherein the batteries are also equipped with a high-current connector according to one of claims 1 to 5.

8. Method for mounting a high-current connector to a housing wall, wherein the high-current connector is designed as a built-in connector and is suitable for use in a battery management system and for this purpose has a connector housing (1), wherein the connector housing (1) is designed with a mounting flange (11) for plug-side mounting to a housing wall, wherein the high-current connector further has a plug contact (3) inserted or to be inserted into the connector housing (1) with a plug axis and a plug region (31) and a cable connection region (32), and wherein the high-current connector (1) is connectable with its cable connection region (32) via a connection cable, which is designed as a high-current cable, to the battery management system, wherein the plug contact is a crimp contact (3),
- wherein the crimp contact has a current-carrying capacity of more than 200 A ("amperes"),
- wherein the cable connection region of the crimp contact (3) is designed as a crimp connection (32),
- wherein the crimp contact (3) is held rotatably about its plug axis in the connector housing (1) at least during assembly,
- wherein, after its assembly, the inserted crimp contact (3) is demountable again by means of a disassembly tool,
- wherein the crimp contact (3) has, between its plug region (31) and its cable connection region (32), a cylindrical holding section (33) without flattened portions or indentations,
- wherein the connector housing (1) has at least one latching arm (14) for latching to a latching collar (347) of the crimp contact (1), wherein the at least one latching arm (14) is removable from the latching collar (347) by means of the disassembly tool for disassembly of the crimp contact (1),
- wherein the connector housing (1) is configured to receive a screw contact (2) as an alternative to the crimp contact (3), wherein the connector housing (1) has an anti-rotation device (123) for cooperation with the screw contact (2),
- wherein the crimp contact (3), however, does not cooperate with the anti-rotation device (123),
- wherein the anti-rotation device is designed as at least one inner straight formation or at least one web (123), wherein the at least one inner straight formation or the at least one web (123) is configured to cooperate with a counter-flattened portion or a groove of a screw contact (2),
wherein the high-current connector, in addition to said connector housing (1), further has a separate second housing as a cable connection housing (5), which has a flange (51) for cable-connection-side mounting to said housing wall,
wherein the cable connection housing (5) has a cable gland, by means of which the crimp contact (3) mounted in the connector housing (1) is fixable in its final position in the connector housing (1), wherein a union nut (6) belongs to the cable gland, through which the connection cable can be guided and with the aid of which it is fixable to the cable connection housing (5),
wherein the method comprises the following steps:
A. the connection cable is suitably cut to length for the respective application;
B. the connection cable is crimped to the crimp contact (3);
C. the crimp contact (3) is inserted on the cable connection side into the connector housing (1) and latched therein, and the connector housing (1) is screwed to the housing wall at a wall opening on the plug side;
D. the cable connection housing (5) is screwed to the housing wall on the cable connection side at the wall opening and thereby surrounds the connection cable;
E. the connection cable and the crimp contact (3) firmly crimped thereto are fixed in their final position by screwing on the union nut (6) to the cable connection housing (5).

9. Method according to claim 8, wherein in method step D, a clamping rubber (4) is arranged between the crimp contact (3) and the connector housing (1) for additional fixation of the crimp contact (3).

## Revendications

1. Connecteur haute intensité, qui est réalisé sous forme de connecteur encastrable et qui est adapté à une utilisation dans un système de gestion de batterie et qui possède à cet effet un boîtier de connecteur (1), le boîtier de connecteur (1) étant réalisé avec une bride de montage (11) pour le montage côté fiche sur une paroi de boîtier, le connecteur haute intensité possédant en outre un contact enfichable (3) inséré ou à insérer dans le boîtier de connecteur (1) avec un axe d'enfichage et une zone d'enfichage (31) et une zone de raccordement de câble (32), et le connecteur haute intensité (1) pouvant être raccordé avec sa zone de raccordement de câble (32) par l'intermédiaire d'un câble de raccordement, qui est réalisé sous forme de câble haute intensité, au système de gestion de batterie, le contact enfichable (3) étant un contact à sertir (3),
- le contact à sertir (3) ayant une capacité de transport de courant supérieure à 200 A (« ampères »),
- la zone de raccordement de câble du contact à sertir (3) étant réalisée sous forme de raccordement à sertir (32),
- le contact à sertir (3) étant maintenu de manière rotative autour de son axe d'enfichage dans le boîtier de connecteur (1) au moins pendant le montage,
- le contact à sertir (3) inséré étant à nouveau démontable après son montage au moyen d'un outil de démontage,
- le contact à sertir (3) présentant, entre sa zone d'enfichage (31) et sa zone de raccordement de câble (32), une section de maintien cylindrique (33) sans méplats ni encoches,
- le boîtier de connecteur (1) possédant au moins un bras d'encliquetage (14) pour l'encliquetage sur un collet d'encliquetage (347) du contact à sertir (1), l'au moins un bras d'encliquetage (14) pouvant être retiré du collet d'encliquetage (347) au moyen de l'outil de démontage pour le démontage du contact à sertir (1),
**caractérisé en ce que**
le boîtier de connecteur (1) est configuré pour recevoir un contact à vis (2) en alternative au contact à sertir (3),
le boîtier de connecteur (1) présentant un dispositif antirotation (123) pour coopérer avec le contact à vis (2),
- le contact à sertir (3) ne coopérant cependant pas avec le dispositif antirotation (123),
- le dispositif antirotation étant réalisé sous forme d'au moins une formation interne rectiligne ou d'au moins une nervure (123), l'au moins une formation interne rectiligne ou l'au moins une nervure (123) étant configurée pour coopérer avec un méplat conjugué ou une rainure d'un contact à vis (2).

2. Connecteur haute intensité selon la revendication précédente, le connecteur haute intensité possédant, en plus dudit boîtier de connecteur (1), encore un deuxième boîtier séparé en tant que boîtier de raccordement de câble (5), qui présente une bride (51) pour le montage côté raccordement de câble sur ladite paroi de boîtier.

3. Connecteur haute intensité selon la revendication 2, le boîtier de raccordement de câble (5) présentant un presse-étoupe, par lequel le contact à sertir (3) monté dans le boîtier de connecteur (1) peut être fixé dans sa position finale dans le boîtier de connecteur (1), un écrou-raccord (6) faisant partie du presse-étoupe, à travers lequel le câble de raccordement peut être guidé et à l'aide duquel il peut être fixé au boîtier de raccordement de câble (5).

4. Connecteur haute intensité selon la revendication 3, le connecteur haute intensité possédant en outre un caoutchouc de serrage (4) pour la fixation supplémentaire du contact à sertir (3) dans le boîtier de connecteur (1).

5. Connecteur haute intensité selon l'une des revendications précédentes, le contact à sertir (3) étant conçu pour transmettre des intensités de courant supérieures à 300 A (« ampères »).

6. Système de batterie, comprenant
- plusieurs batteries rechargeables et plusieurs câbles de raccordement, par lesquels les batteries sont connectées électriquement conductrices les unes aux autres en parallèle et/ou en série, et
- un système de gestion de batterie qui est équipé d'au moins un connecteur haute intensité selon l'une des revendications précédentes, réalisé sous forme de connecteur encastrable, dans lequel
- les batteries sont connectées au système de gestion de batterie et à chaque fois au moins un des câbles de raccordement par l'intermédiaire de l'au moins un connecteur haute intensité.

7. Système de batterie selon la revendication 6, les batteries étant également équipées d'un connecteur haute intensité selon l'une des revendications 1 à 5.

8. Procédé de montage d'un connecteur haute intensité sur une paroi de boîtier, le connecteur haute intensité étant réalisé sous forme de connecteur encastrable et étant adapté à une utilisation dans un système de gestion de batterie et possédant à cet effet un boîtier de connecteur (1), le boîtier de connecteur (1) étant réalisé avec une bride de montage (11) pour le montage côté fiche sur une paroi de boîtier, le connecteur haute intensité possédant en outre un contact enfichable (3) inséré ou à insérer dans le boîtier de connecteur (1) avec un axe d'enfichage et une zone d'enfichage (31) et une zone de raccordement de câble (32), et le connecteur haute intensité (1) pouvant être raccordé avec sa zone de raccordement de câble (32) par l'intermédiaire d'un câble de raccordement, qui est réalisé sous forme de câble haute intensité, au système de gestion de batterie, le contact enfichable étant un contact à sertir (3),
- le contact à sertir ayant une capacité de transport de courant supérieure à 200 A (« ampères »),
- la zone de raccordement de câble du contact à sertir (3) étant réalisée sous forme de raccordement à sertir (32),
- le contact à sertir (3) étant maintenu de manière rotative autour de son axe d'enfichage dans le boîtier de connecteur (1) au moins pendant le montage,
- le contact à sertir (3) inséré étant à nouveau démontable après son montage au moyen d'un outil de démontage,
- le contact à sertir (3) présentant, entre sa zone d'enfichage (31) et sa zone de raccordement de câble (32), une section de maintien cylindrique (33) sans méplats ni encoches,
- le boîtier de connecteur (1) possédant au moins un bras d'encliquetage (14) pour l'encliquetage sur un collet d'encliquetage (347) du contact à sertir (1), l'au moins un bras d'encliquetage (14) pouvant être retiré du collet d'encliquetage (347) au moyen de l'outil de démontage pour le démontage du contact à sertir (1),
- le boîtier de connecteur (1) étant configuré pour recevoir un contact à vis (2) en alternative au contact à sertir (3), le boîtier de connecteur (1) présentant un dispositif antirotation (123) pour coopérer avec le contact à vis (2),
- le contact à sertir (3) ne coopérant cependant pas avec le dispositif antirotation (123),
- le dispositif antirotation étant réalisé sous forme d'au moins une formation interne rectiligne ou d'au moins une nervure (123), l'au moins une formation interne rectiligne ou l'au moins une nervure (123) étant configurée pour coopérer avec un méplat conjugué ou une rainure d'un contact à vis (2),
le connecteur haute intensité possédant, en plus dudit boîtier de connecteur (1), encore un deuxième boîtier séparé en tant que boîtier de raccordement de câble (5), qui présente une bride (51) pour le montage côté raccordement de câble sur ladite paroi de boîtier,
le boîtier de raccordement de câble (5) présentant un presse-étoupe, par lequel le contact à sertir (3) monté dans le boîtier de connecteur (1) peut être fixé dans sa position finale dans le boîtier de connecteur (1), un écrou-raccord (6) faisant partie du presse-étoupe, à travers lequel le câble de raccordement peut être guidé et à l'aide duquel il peut être fixé au boîtier de raccordement de câble (5),
le procédé comprenant les étapes suivantes :
A. le câble de raccordement est coupé à la longueur appropriée pour l'application respective ;
B. le câble de raccordement est serti sur le contact à sertir (3) ;
C. le contact à sertir (3) est inséré côté raccordement de câble dans le boîtier de connecteur (1) et y est encliqueté, et le boîtier de connecteur (1) est vissé à la paroi de boîtier au niveau d'une ouverture murale côté fiche ;
D. le boîtier de raccordement de câble (5) est vissé à la paroi de boîtier côté raccordement de câble au niveau de l'ouverture murale et entoure ainsi le câble de raccordement ;
E. le câble de raccordement et le contact à sertir (3) fermement serti à celui-ci sont fixés dans leur position finale par vissage de l'écrou-raccord (6) sur le boîtier de raccordement de câble (5).

9. Procédé selon la revendication 8, dans lequel à l'étape de procédé D, un caoutchouc de serrage (4) est disposé entre le contact à sertir (3) et le boîtier de connecteur (1) pour la fixation supplémentaire du contact à sertir (3).
